# EUROPEAN PATENT SPECIFICATION

(11) **EP 3 850 944 B1**
(45) Date of publication and mention of the grant of the patent: **15.02.2023**
(21) Application number: 20828246.7
(22) Date of filing: 08.07.2020
(51) Int. Cl.: A01K 5/02, A01K 5/00

(54) **SNACK MACHINE FOR PETS**
SNACKAUTOMAT FÜR HAUSTIERE
DISTRIBUTEUR DE SNACKS POUR ANIMAUX DOMESTIQUES

(30) Priority: 04.12.2019 CN 201911224547; 04.12.2019 CN 201922150895 U
(43) Date of publication of application: 21.07.2021
(73) Proprietor: Beijing Kitten & Puppy Technology Co., Ltd., Beijing 100085 (CN)
(72) Inventor: WU, Jin, Beijing 100085 (CN); HU, Wenfeng, Beijing 100085 (CN); HU, Xin, Beijing 100085 (CN)
(74) Representative: Vesterinen, Jussi Tapio
(86) International application number: PCT/CN2020/100806
(87) International publication number: WO 2021/109570

(56) References cited:
- CN-A- 104 210 739
- CN-A- 110 301 368
- CN-A- 110 301 368
- CN-A- 110 833 043
- CN-U- 204 701 944
- CN-U- 204 701 944
- CN-U- 207 670 959
- KR-A- 20190 001 749
- US-A1- 2019 046 311

## Description

### TECHNICAL FIELD

The present invention relates to the technical field of pet snack devices, in particular to a pet snack machine.

### BACKGROUND

With the continuous progress of society and the continuous improvement of living standards of people, there are more and more people keeping pets, and pet feeding machines are gradually used by people as a machine that can feed pets; the traditional pet feeding machines often store pet snacks through a storage bin, the cover of the storage bin is simple to open and close, but the sealing performance is not good and the cover is easy to loose, or the cover is firmly fixing, but it is complicated to open and close, which brings inconvenience to the use process. In addition, the traditional pet feeding machine has poor interaction with pets and cannot control the amount of single unloading, which brings inconvenience to use.

Chinese patent documents disclose a pet feeding machine, which comprises a storage bin, a rotary hopper, an unloading channel and a material basin, wherein a cover is placed on the top of the storage bin, and feeding can be carried out by directly taking and placing the cover. In the feeding process, the pet feeding machine reduces the problem of material blockage by unloading during positive and negative rotation, and the material output from the unloading channel is contained through the material basin.

US2019046311 (A1) disclose pellet delivery systems capable of reliably and precisely delivering pellets over a large area. In some examples, the system can deliver one or more pellets in one delivery cycle using a slide chamber. In other examples, the system can deliver one or more pellets per delivery cycle using a rotating disk comprising one or more holes. In any of these examples, the system can eject the pellets using a projector and/or gravity.

CN204701944U relates to a transshipment bottle comprising a lockable lid.

Compared with the prior art, the applicant finds that at least the following technical problems exist.
1. The pet feeding machine puts the cover on the top of the storage bin, and it is easy to open and close, but the cover is not firmly fixing when it is closed, easy to loose, and poor in sealing performance.
2. The pet feeding machine reduces the material blockage in the manner of positive and negative rotation, but the pet feeding machine has poor control over the amount of single unloading.
3. The pet feeding machine can only feed and has poor interaction with pets.

### SUMMARY

The present invention aims to provide a pet snack machine to solve the technical problems in the prior art that the cover of the traditional pet feeding machine is easy to loosen during closing and is complicated to operate during opening. Many technical effects that can be produced by the preferred technical scheme among many technical schemes according to the present invention (a first chute is provided on the cover to limit the sliding track of the connector, and the second chute is provided on the connector, so that the first mounting part can slide in the second chute without affecting the movement of the connector, and the first mounting part and the second mounting part enable the elastic element to be stably mounted; the arc-shaped guide plate is abutted against the connector and is matched with the spring so as to convert the rotation of the knob into linear sliding of the connector; the food storage bin is used to store pet snacks, and the projection bin is used to project pet snacks; on the one hand, the unloading mechanism with double food stirring trays makes the unloading more smooth, and on the other hand, it can control the amount of single unloading; the lower food stirring plate divides the transition chamber into a plurality of transition units, so that the amount of each unloading is the same; the upper food stirring plate is provided as an arc-shaped food stirring plate and is obliquely provided on the post part, so that the phenomena of material blockage and material splashing when the upper food stirring plate rotates can be effectively avoided, and the unloading is smoother; the ejection driving device drives the pushing plate to move back and forth along the ejection channel through the slider, so that pet snacks can be projected repeatedly for many times; the ejection power device is in transmission connection with the ejection cam, the ejection cam comprises a main wheel and an arc-shaped blade so that the periodic offset and separation of the ejection cam and the slider can be realized, and the limit switch can control the ejection power device to be closed after a single ejection; the double-shockproof spring mechanism comprises a guide rod, a thrust spring and a damping spring, the guide rod makes the sliding process of the slider more stable, the ejection cam drives the thrust spring to accumulate power, the thrust spring provides ejection power for the slider after being released, and the damping spring has the damping function so that the device is more stable, etc.) will be described in detail hereinafter.

In order to achieve the above object, the present invention provides the pet snack machine as recited in claim 1.

Preferably, the bottom of the knob is provided with an arc-shaped guide plate, the connector is abutted against the arc-shaped guide plate, the curvature of the arc-shaped guide plate gradually increases in the direction from the starting end to the ending end, the knob is rotated in the direction from the starting end to the ending end, and the connector slides to the inner side of the outer shell under the action of the elastic element so that the abutting part is separated from the grid blocking part.

Preferably, an unloading mechanism with double food stirring trays is also provided inside the outer shell, the unloading mechanism with double food stirring trays comprises an upper food stirring tray, a lower food stirring tray and a food stirring driving device, wherein the upper food stirring tray and the lower food stirring tray synchronously rotate when being driven by the food stirring driving device, wherein: the upper food stirring tray is provided in the food storage bin; a transition chamber is provided in the transition bin, the lower food stirring tray is provided in the transition chamber, at least two lower food stirring plates are provided on the lower food stirring tray, and all the lower food stirring plates divide the transition chamber into at least two transition units; the upper food stirring tray is capable of pushing pet snacks in the food storage bin into the transition unit and is pushed into the projection bin by the lower food stirring plate.

Preferably, the shape of the transition chamber is cylindrical, the lower food stirring tray comprises a rotating shaft, all the lower food stirring plates are uniformly and detachably distributed on the outer wall of the rotating shaft, all the lower food stirring plates divide the transition chamber into at least two transition units uniformly, and the transmission end of the rotating shaft is in transmission connection with the food stirring driving device.

Preferably, the upper food stirring tray comprises a post part and an upper food stirring plate, wherein: the number of the upper food stirring plates is at least one, all the upper food stirring plates are circumferentially distributed on the outer wall of the post part, and the connecting end of the rotating shaft passes through the transition chamber and is inserted into the food storage bin to be connected with the post part; the upper food stirring plate is provided as an arc-shaped food stirring plate, and the upper food stirring plate is obliquely provided with respect to the post part.

Preferably, an ejection channel is provided in the projection bin, a first guide rail is provided on the side wall of the projection bin communicated with the ejection channel, a cam ejection mechanism is also provided inside the outer shell, the cam ejection mechanism comprises an ejection driving device, a slider and a pushing plate, wherein: the pushing plate is provided inside the ejection channel, one end of the slider is in transmission connection with the ejection driving device, and the other end of the slider is connected with the pushing plate through the first guide rail; the slider is capable of driving the pushing plate to move back and forth along the ejection channel when being driven by the driving device.

Preferably, the ejection driving device comprises an ejection power device, an ejection cam and a double-shockproof spring mechanism, an abutting wheel is provided at one end of the slider far away from the pushing plate, and a limit switch is provided on the outer wall of the projection bin, wherein: the ejection cam comprises a main wheel and an arc-shaped blade connected with the main wheel, the main wheel is in transmission connection with the ejection power device, the curvature of the arc-shaped blade gradually increases in the direction far away from the main wheel, the slider is slidably provided on the double-shockproof spring mechanism and is capable of being abutted against the outer side of the arc-shaped blade through the abutting wheel; the limit switch is electrically connected with the ejection power device, and the slider is capable of being abutted against the limit switch to close the ejection power device.

Preferably, the double-shockproof spring mechanism comprises a guide rod, a thrust spring and a damping spring, and a first mounting block and a second mounting block are provided on the side wall of the projection bin, wherein: both ends of the guide rod are provided on the first mounting block and the second mounting block, respectively, and the guide rod is provided parallel to the ejection channel; the thrust spring is sleeved on the guide rod, and both ends of the thrust spring are abutted against the slider and the first mounting block, respectively; the damping spring is sleeved on the guide rod, and both ends of the damping spring are abutted against the slider and the second mounting block, respectively; the slider is sleeved on the guide rod, the ejection cam is capable of being abutted against the abutting wheel when being driven by the ejection power device and pushes the slider to slide along the guide rod so that the slider drives the thrust spring to deform; and the ejection cam is separable from the abutting wheel, so that the slider moves reversely along the guide rod when being driven by the thrust spring.

The pet snack machine according to the present invention has at least the following beneficial effects.

The pet snack machine comprises an outer shell and a sealing cover covering the outer shell, in which the sealing cover comprises a cover, a knob, a connector and an elastic element, wherein: the cover is used to seal the outer shell, the knob can control the sealing cover to be opened, the cover is provided with a mounting hole, the knob is rotatably provided in the mounting hole, and the knob is rotated so as to control the sealing cover to be opened; the connector is provided in the outer shell, one end of the connector is abutted against the knob, the other end of the connector passes through the cover and is provided with an abutting part, the inner side of the outer shell is provided with a grid blocking part at a position corresponding to the abutting part, and the abutting part is capable of being abutted against the lower side of the grid blocking part to lock the sealing cover. On the one hand, the connector has the function of transmission, which can convert the rotation of the knob into the sliding of the connector itself, and on the other hand, the abutting part provided at the end of the connector is matched with the grid blocking part at the corresponding position of the outer shell, which has the function of locking. The elastic element is provided in the cover, and both ends of the elastic element are abutted against the cover and the connector respectively, so that the knob is rotated, and the connector is movable in the direction close to the knob under the action of the elastic element to separate the abutting part from the grid blocking part. The sealing cover can be opened only by rotating the knob; the sealing cover of the present invention is not only firm during closing, which is convenient for long-term storage of pet snacks, but also only needs to rotate the knob during opening, which is convenient and quick to operate.

### BRIEF DESCRIPTION OF THE DRAWINGS

In order to explain the embodiments of the present invention or the technical scheme in the prior art more clearly, the drawings used in the embodiments or the description of the prior art will be briefly introduced hereinafter. Obviously, the drawings in the following description are only some embodiments of the present invention. For those skilled in the art, other drawings can be obtained according to these drawings without paying creative labor.
FIG. 1 is an exploded diagram of the whole machine structure according to the present invention;
FIG. 2 is a schematic structural diagram of a sealing cover, an outer shell and an inner shell according to the present invention;
FIG. 3 is an exploded diagram of a sealing cover structure according to the present invention;
FIG. 4 is a schematic structural diagram of a knob, a connector and an elastic element according to the present invention;
FIG. 5 is a schematic structural diagram of an upper outer shell according to the present invention;
FIG. 6 is a schematic structural diagram of a food storage bin according to the present invention;
FIG. 7 is a schematic structural diagram of an unloading mechanism with double food stirring trays according to the present invention;
FIG. 8 is a schematic structural diagram of a transition bin according to the present invention;
FIG. 9 is an exploded diagram of the structure of an unloading mechanism with double food stirring trays according to the present invention;
FIG. 10 is a schematic diagram of the connection between the upper food stirring tray and the lower food stirring tray according to the present invention;
FIG. 11 is a schematic structural diagram of an upper food stirring tray according to the present invention;
FIG. 12 is a schematic structural diagram of a lower food stirring tray according to the present invention;
FIG. 13 is a schematic structural diagram of a projection bin according to the present invention;
FIG. 14 is a schematic structural diagram of a cam ejection mechanism according to the present invention;
FIG. 15 is a schematic structural diagram of an ejection cam and a double-shockproof spring mechanism according to the present invention;
FIG. 16 is a schematic diagram of an ejection power device and an ejection cam mechanism according to the present invention;
FIG. 17 is an exploded diagram of the structure of a double-shockproof spring mechanism, a slider and a pushing plate;
FIG. 18 is a schematic structural diagram of a limit switch according to the present invention.

### DESCRIPTION OF THE EMBODIMENTS

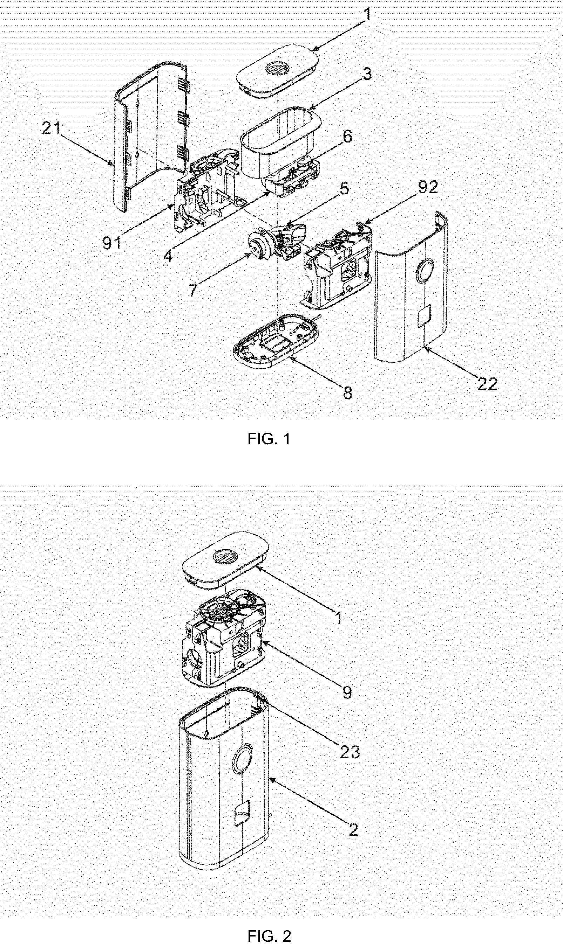

The present invention provides a pet snack machine, as shown in FIG. 1-FIG. 5, which comprises an outer shell 2 and a sealing cover 1 covering the outer shell 2, in which the sealing cover 1 comprises a cover, a knob 11, a connector 14 and an elastic element 15, wherein: the cover is provided with a mounting hole 121, and the knob 11 is rotatably provided in the mounting hole 121; the connector 14 is slidably provided in the outer shell 2, one end of the connector 14 is abutted against the knob 11, the other end of the connector 14 is provided with an abutting part 142, the inner side of the outer shell 2 is provided with a grid blocking part 23 at a position corresponding to the abutting part 142, the abutting part 142 is capable of being abutted against the lower side of the grid blocking part 23 to lock the sealing cover 1, the elastic element 15 is provided in the cover, and both ends of the elastic element are abutted against the cover and the connector 14 respectively, and the elastic element 15 is in a deformed state. The knob 11 is rotated, and the connector 14 is movable in the direction close to the knob 11 under the action of the elastic element 15 to separate the abutting part 142 from the grid blocking part 23.

When the sealing cover 1 is locked, the top of the abutting part 142 is abutted against the bottom of the grid blocking part 23. The sealing cover 1 is locked on the outer shell 2, and the elastic element 15 is in a deformed state. When the sealing cover 1 is opened, the knob 11 is rotated, and the deformed elastic element 15 pushes the connector 14 to move in the direction close to the knob, so that the abutting part 142 and the grid blocking part 23 are separated from each other. At this time, the sealing cover 1 can be directly removed. In the present invention, when the sealing cover 1 is closed, the abutting part 142 is matched with the grid blocking part 23, so that the sealing cover 1 firmly covers the outer shell 2, which is firmly covered and is sealed completely. When the sealing cover 1 is opened, only the knob 11 needs to be rotated, and the connector 14 can separate the abutting part 142 from the grid blocking part 23 under the action of the elastic element 15, thus completing the opening of the sealing cover. The opening operation is convenient and quick.

As an alternative embodiment, as shown in FIGS. 1-5, the cover comprises an upper cover 12 and a lower cover 13 which are detachably connected, the mounting hole 121 is provided on the upper cover 12, the outer cover 2 comprises a first outer cover 21 and a second outer cover 22, the first outer cover 21 and the second outer cover 22 are detachably connected, and the inner walls of the first outer cover 21 and the second outer cover 22 are both provided grid blocking plates. When the first outer shell 21 and the second outer shell 22 are connected, the two grid blocking plates are abutted against each other to form a grid blocking part 23. A chassis 8 is detachably provided at the bottom of the outer shell 2.

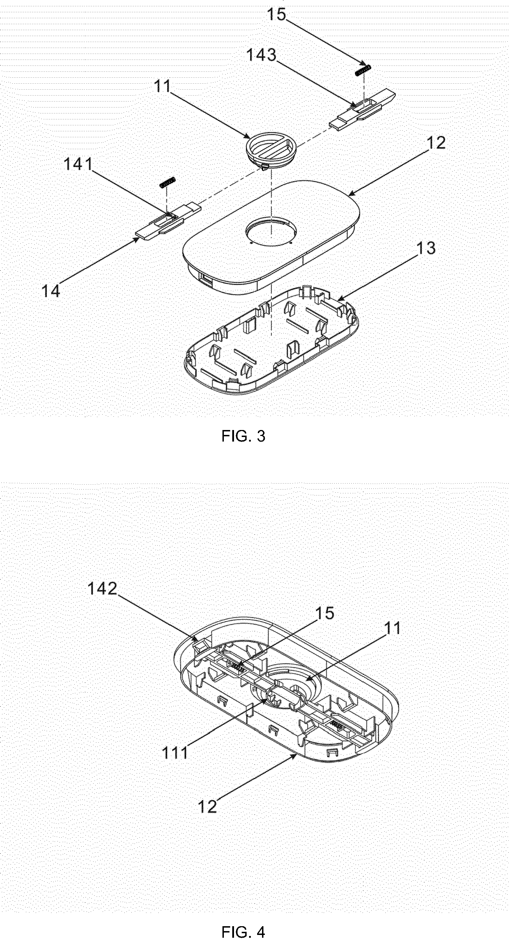

As shown in FIGS. 3-5, a first chute 123 is provided inside the cover, and the connector 14 is slidably provided in the first chute 123; a first mounting part 122 is provided in the first chute 123, a second chute 143 is provided on the connector 14, the second chute 143 is provided as a through groove, a second mounting part 141 is provided on the inner wall of the second chute 143, the first mounting part 122 passes through the second chute 143 and is provided opposite to the second mounting part 141, and both ends of the elastic element 15 are provided on the first mounting part 122 and the second mounting part 141, respectively. The first mounting part 122 and the second mounting part 141 are provided as two opposite fixing posts, the cross-sectional shape of the fixing posts is cross-shaped, the elastic element 15 is provided as a spring, and both ends of the spring are sleeved on the two fixing posts, respectively.

As an alternative embodiment, as shown in FIG. 4, the bottom of the knob 11 is provided with an arc-shaped guide plate 111, the connector 14 is abutted against the arc-shaped guide plate 111, the curvature of the arc-shaped guide plate 111 gradually increases in the direction from the starting end to the ending end, and a limit block is provided at the starting end of the arc-shaped guide plate 111, so that the knob 11 can only rotate unidirectionally. The knob 11 is rotated in the direction from the starting end to the ending end, and the connector 14 slides to the inner side of the outer shell 2 under the action of the elastic element 15 so that the abutting part 142 is separated from the grid blocking part 23.

As shown in FIG. 1-FIG. 5, the number of arc-shaped guide plates 111 is set to two, and the two arc-shaped guide plates 111 are symmetrically provided. The distance between the starting ends of the two arc-shaped guide plates 111 is greater than the distance between the ending ends of the two arc-shaped guide plates 111. The number of the connectors 14 and number of the elastic elements 15 are both set to two, and the two connectors 14 and the two elastic elements 15 are symmetrically provided with respect to the knob 11.

The bottom surface of the abutting part 142 is provided as an inclined plane, and the sealing cover 1 can be mounted only by pressing down the sealing cover 1, so that it is further more convenient and quick to operate.

As shown in FIG. 1, a food inlet is provided at the top of the outer shell 2, a food outlet is provided at the side wall of the outer shell 2, and a food storage bin 3, a transition bin 4 and a projection bin 5 are provided inside the outer shell 2, wherein: the sealing cover 1 is provided on the food inlet and above the food storage bin 3; the food storage bin 3, the transition bin 4 and the projection bin 5 are sequentially communicated from top to bottom; the projection bin 5 is communicated with the food outlet.

As shown in FIG. 1 and FIG. 2, an inner shell 9 is provided inside the outer shell 2, the food storage bin 3 and the transition bin 4 are provided above the inner shell 9, and the projection bin 5 is provided inside the inner shell 9. The inner shell 9 comprises a first inner shell 91 and a second inner shell 92, and the first inner shell 91 and the second inner shell 92 are detachably connected.

As an alternative embodiment, as shown in FIG. 1, FIG. 7 and FIG. 8, an unloading mechanism with double food stirring trays 6 is also provided inside the outer shell 2, the unloading mechanism with double food stirring trays 6 comprises an upper food stirring tray 61, a lower food stirring tray 62 and a food stirring driving device 63, wherein the upper food stirring tray 61 and the lower food stirring tray 62 synchronously rotate when being driven by the food stirring driving device 63, wherein: the upper food stirring tray 61 is provided in the food storage bin 3; a transition chamber is provided in the transition bin 4, the lower food stirring tray 62 is provided in the transition chamber, at least two lower food stirring plates 621 are provided on the lower food stirring tray 62, and all the lower food stirring plates 621 divide the transition chamber into at least two transition units; the upper food stirring tray 61 is capable of pushing pet snacks in the food storage bin 3 into the transition unit and is pushed into the projection bin 5 by the lower food stirring plate 621; a discharging hole 321 is provided at the bottom of the food storage bin 3, and the discharging hole 321 is provided above the transition chamber 41.

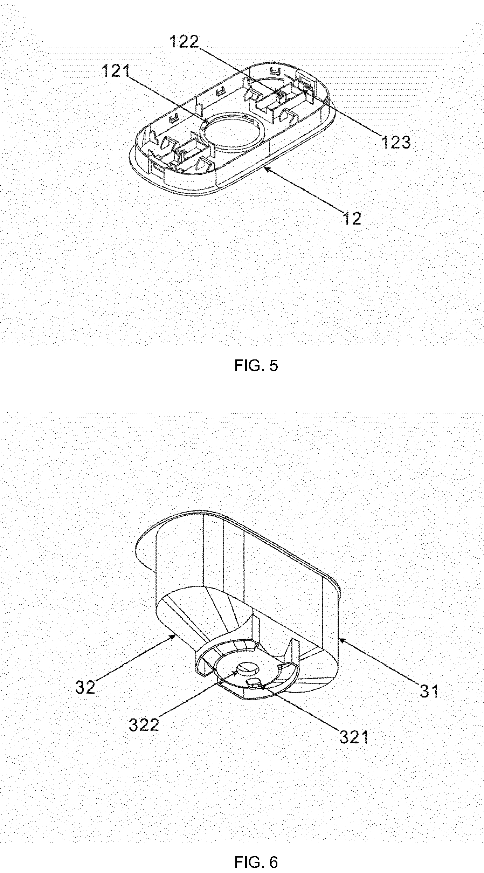

As shown in FIG. 6, the food storage bin 3 comprises an upper bin body 31 and a lower bin body 32, wherein the lower bin body 32 is provided at the bottom of the upper bin body 31; the lower bin body 32 is provided in a funnel shape, the caliber of the lower bin body 32 decreases in sequence in the direction far away from the upper bin body 31, the discharging hole 321 is provided at the bottom of the lower bin body 32, and the upper food stirring tray 61 is provided near the discharging hole 321; the cross section of the upper bin body 31 is in the shape of a rounded rectangle, and the cross section of the lower bin body 32 is in the shape of a rounded rectangle; the lower bin body 32 with a funnel shape is convenient for pet snacks to slide down to a position close to the discharging hole 321, which is convenient for unloading.

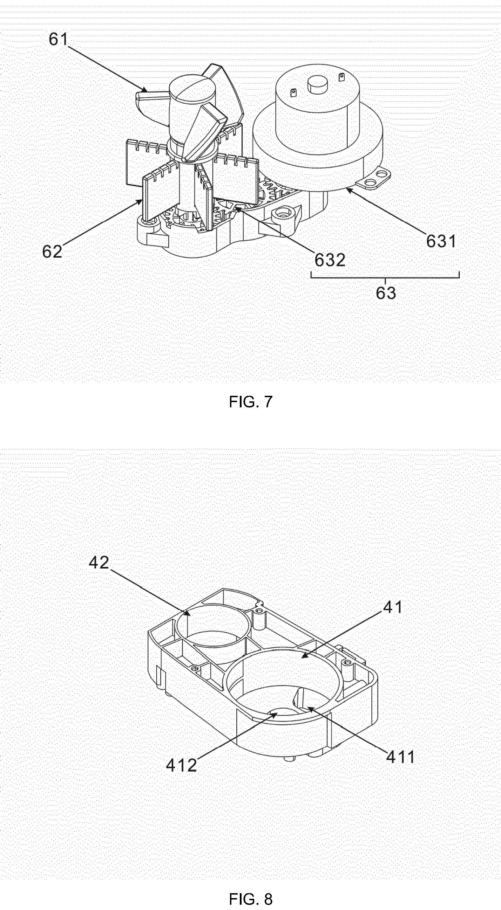

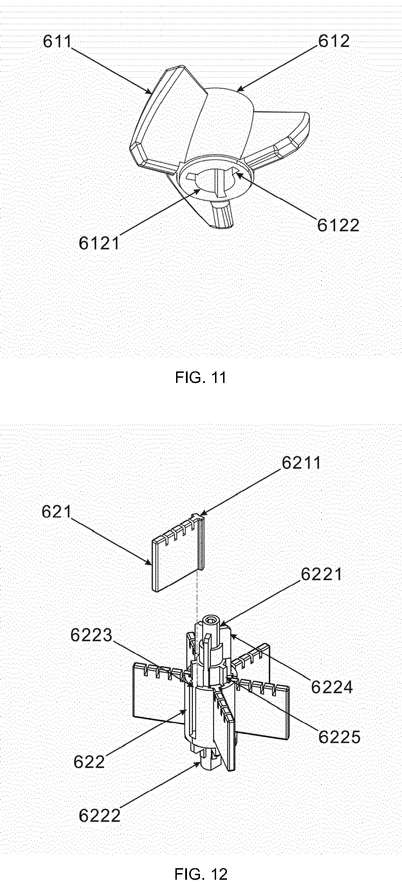

As an alternative embodiment, as shown in FIG. 8 and FIG. 12, the shape of the transition chamber 41 is cylindrical, the lower food stirring tray 62 comprises a rotating shaft 622, all the lower food stirring plates 621 are uniformly and detachably distributed on the outer wall of the rotating shaft 622, all the lower food stirring plates 621 divide the transition chamber 41 into at least two transition units uniformly, and the transmission end 6222 of the rotating shaft 622 is in transmission connection with the food stirring driving device 63; preferably, the number of the lower food stirring plates 621 is set to six, and the six lower food stirring plates 621 divide the transition chamber 41 into six transition units.

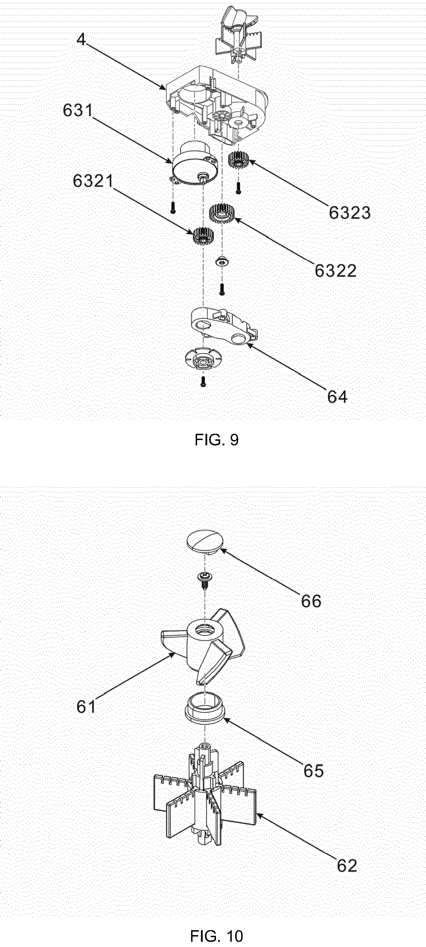

As an alternative embodiment, as shown in FIG. 10 and FIG. 11, the upper food stirring tray 61 comprises a post part 612 and an upper food stirring plate 611, wherein: the number of the upper food stirring plates 611 is at least one, the number of the upper food stirring plates 611 is smaller than that of the lower food stirring plates 621, all the upper food stirring plates 611 are circumferentially distributed on the outer wall of the post part 612, the bottom of the lower bin body 32 is provided with a connecting hole 322, the connecting end 6221 of the rotating shaft 622 sequentially passes through the connecting hole 322 and is inserted into the food storage bin 3 to be connected with the post part 612; the upper food stirring plate 611 is provided as an arc-shaped food stirring plate, and the upper food stirring plate 611 is obliquely provided with respect to the post part 612; the inclined direction of the upper food stirring plate 611 is opposite to its rotating direction, and the upper food stirring plate 611 forms a propeller-like blade, so that the phenomena of material blockage and material splashing in the unloading process can be effectively avoided, and the unloading is smoother; preferably, the number of the upper food stirring plates 611 is set to three.

As shown in FIG. 11 and FIG. 12, a fixing groove 6121 is provided on the bottom of the post part 612, a positioning groove 6122 is circumferentially provided on the groove wall of the fixing groove 6121, a connecting end 6221 of the rotating shaft 622 is inserted into the fixing groove 6121, a positioning block 6224 is circumferentially provided on the outer wall of the connecting end 6221, and the positioning block 6224 is provided in the positioning groove 6122.

As shown in FIG. 10, the unloading mechanism with double stirring trays 6further comprises a connecting sleeve 65, and the connecting sleeve is sleeved on the rotating shaft 622 and is located between the upper food stirring plate 611 and the lower food stirring plate 621.

As shown in FIG. 12, a mounting groove 6223 is provided on the outer wall of the rotating shaft 622, a mounting strip 6211 is provided on the edge of the lower food stirring plate 621, the shape of the mounting strip 6211 is matched with the shape of the mounting groove 6223, the cross section of the mounting strip 6211 is T-shaped, and the lower food stirring plate 621 and the rotating shaft 622 are detachably connected through the mounting strip 6211 and the mounting groove 6223. According to the actual demand, the size of the transition unit can be adjusted by installing different numbers of lower food stirring plates 621, and then the amount of single unloading can be adjusted.

As shown in FIG. 12, the rotating shaft 622 comprises a first section, a second section and a third section which are sequentially provided from bottom to top. The diameters of the first section, the second section and the third section are sequentially reduced, so that the rotating shaft 622 is stepped. The mounting groove 6223 is provided on the first section. The bottom of the first section is provided with a transmission end 6222. The top end of the third section is provided with a connecting end 6221. A plurality of connecting strips are vertically and uniformly provided on the outer wall of the second section. The outer sides of the connecting strips far away from the axial direction of the rotating shaft 622 are provided as cambered surfaces so that the outer sides of all the connecting strips form mounting surfaces matched with the inner walls of the connecting sleeves 65. The second section forms a mounting section 6225. The connecting sleeve 65 is sleeved on the mounting section 6225, and the inner wall is attached to the mounting surface. The bottom of the connecting sleeve 65 is provided with a flange. The diameter of the flange is not less than that of the first section, which effectively prevents the lower food stirring plate 621 from being separated from the mounting groove 6223.

As an alternative embodiment, as shown in FIG. 8 and FIG. 9, the transition bin 4 is provided with a mounting part and a mounting chamber 42. The food stirring driving device 63 comprises a food stirring power device 631 and a food stirring transmission device 632. The food stirring transmission device 632 comprises an input gear 6321, a transition gear 6322 and an output gear 6323. One end of the food stirring power device 631 is provided in the mounting chamber 42, and the other end of the food stirring power device 631 is in transmission connection with the input gear 6321 through the output shaft; the transition gear 6322 is provided on the mounting part; the bottom of the transition bin 4 is communicated with the transition chamber 41 and is provided with a fixing hole 412. The transmission end 6222 of the rotating shaft 622 passes through the transition chamber 41 and the fixing hole 412 and is connected with the output gear 6323. Both the input gear 6321 and the output gear 6323 are engaged with the transition gear 6322; a transmission device housing 64 is provided below the transition bin 4, and the input gear 6321, the transition gear 6322 and the output gear 6323 are all provided in the transmission device housing 64.

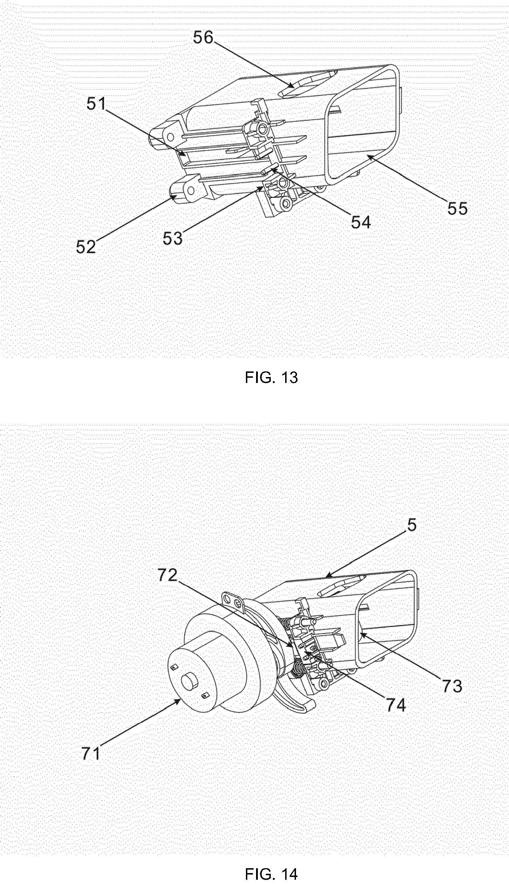

As an alternative embodiment, as shown in FIGS. 13-15, an ejection channel 55 is provided in the projection bin 5, the food outlets of the ejection channel 55 are communicated, a first guide rail 51 is provided on the side wall of the projection bin 5 communicated with the ejection channel 55, a cam ejection mechanism 7 is also provided inside the outer shell 2, the cam ejection mechanism 7 comprises an ejection driving device 71, a slider 72 and a pushing plate 73, wherein: the pushing plate 73 is provided inside the ejection channel 55, one end of the slider 72 is in transmission connection with the ejection driving device 71, and the other end of the slider 72 is connected with the pushing plate 73 through the first guide rail 51; a feed inlet 56 is provided at the top of the projection bin 5, the feed inlet 56 is communicated with the guide port 411, and the pushing plate 73 is provided below the feed inlet 56. Pet snacks entering from the feed inlet 56 can fall onto the pushing plate 73 at the initial position. The slider 72 is capable of driving the pushing plate 73 to move back and forth along the ejection channel 55 when being driven by the driving device.

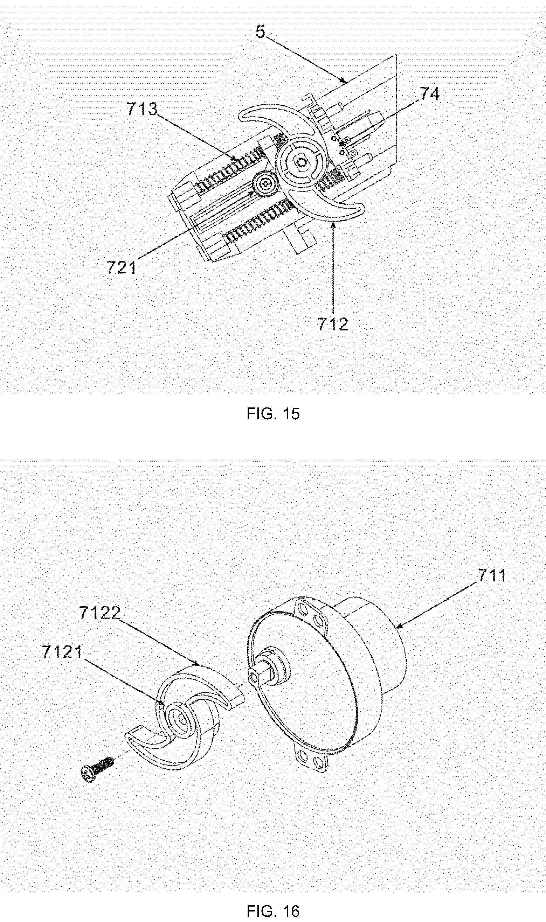

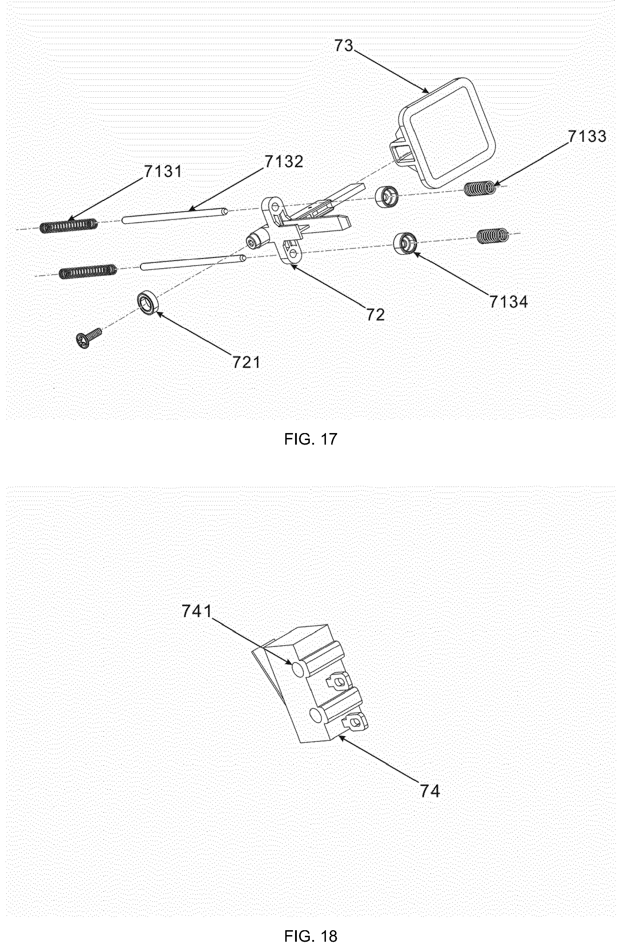

As an alternative embodiment, as shown in FIG. 15-FIG. 18, the ejection driving device 71 comprises an ejection power device 711, an ejection cam 712 and a double-shockproof spring mechanism 713, an abutting wheel 721 is provided at one end of the slider 72 far away from the pushing plate 73, a push rod is provided at the end of the slider 72 opposite to the abutting wheel 721, the pushing plate 73 is detachably provided on the push rod, a second guide rail is provided on the side wall of the projection bin 5 opposite to the first guide rail 51, the end of the push rod passes through the first guide rail 51 and the ejection channel 55 in sequence and then is placed in the second guide rail; a limit switch 74 is provided on the outer wall of the projection bin 5, wherein: the ejection cam 712 comprises a main wheel 7121 and an arc-shaped blade 7122 connected with the main wheel 7121, the main wheel 7121 is in transmission connection with the ejection power device 711, the curvature of the arc-shaped blade 7122 gradually increases in the direction far away from the main wheel 7121, the slider 72 is slidably provided on the double-shockproof spring mechanism 713 and is capable of being abutted against the outer side of the arc-shaped blade 7122 through the abutting wheel 721, and preferably, the number of the arc-shaped blades 7122 is set to two; the limit switch 74 is electrically connected with the ejection power device 711, and the slider 72 is capable of being abutted against the limit switch 74 to close the ejection power device 711.

Two mounting posts 54 are provided on the outer wall of the projection bin 5, and two through holes 741 are provided on the limit switch 74. The limit switch 74 is detachably provided on the mounting posts 54 through the through holes 741, and a contact plate is provided on the limit switch 74. When the projection operation is completed, the slider 72 can be abutted against the contact plate of the limit switch 74 so that the limit switch 74 controls the ejection power device 711 to closed.

As an alternative embodiment, the double-shockproof spring mechanism 713 comprises a guide rod 7132, a thrust spring 7131 and a damping spring 7133, and a first mounting block 52 and a second mounting block 53 are provided on the side wall of the projection bin 5, wherein: both ends of the guide rod 7132 are provided on the first mounting block 52 and the second mounting block 53, respectively, the guide rod 7132 is provided parallel to the ejection channel 55, and the ejection channel 55 is obliquely provided upward from the starting end to the ending end; the thrust spring 7131 is sleeved on the guide rod 7132, and both ends of the thrust spring are abutted against the slider 72 and the first mounting block 52, respectively. On the one hand, the thrust spring 7131 provides power for the pushing plate 73, and on the other hand, it has a damping effect after the projection operation is completed. The damping spring 7133 is sleeved on the guide rod 7132, and both ends of the damping spring are abutted against the slider 72 and the second mounting block, respectively. The damping spring 7133 mainly plays a damping role. A mounting sleeve 7134 is provided between the damping spring 7133 and the slider 72. The mounting sleeve 7134 is sleeved on the guide rod 7132, the damping spring 7133 is provided on the mounting sleeve 7134, and the damping spring 7133 is abutted against the slider 72 through the mounting sleeve 7134. The slider 72 is provided with a sliding hole, the slider 72 is sleeved on the guide rod 7132, the ejection cam 712 is capable of being abutted against the abutting wheel 721 when being driven by the ejection power device 711 and pushes the slider 72 to slide along the guide rod 7132 so that the slider 72 drives the thrust spring 7131 to deform. At this time, the kinetic energy of the ejection cam 712 is converted into the elastic potential energy of the thrust spring 7131. The ejection cam 712 is separable from the abutting wheel 721, so that the slider 72 moves reversely along the guide rod 7132 when being driven by the thrust spring 7131. At this time, the elastic potential energy of the thrust spring 7131 is converted into the kinetic energy of the slider 72.

Two sliding holes are provided in the slider 72. The number of the thrust springs 7131, the guide rods 7132, the damping springs 7133, the mounting sleeves 7134, the first mounting blocks 52 and the second mounting blocks 53 is set to two.

As shown in FIG. 13, two mounting posts 54 are provided on the mounting plate, and both ends of the mounting plate are fixedly connected with two second mounting blocks 53, respectively. A slide way is formed between the mounting plate and the outer wall of the projection bin 5, and a sliding strip is provided on the slider 72. The sliding strip is inserted into the slide way and is slidable along the slide way. The sliding strip is provided parallel to the guide rod 7132, further improving the sliding stability of the slider 72.

As an alternative embodiment, an electric control device is provided between the outer shell 2 and the inner shell 9. Both the food stirring power device 631 and the ejection power device 711 are electrically connected with the electric control device. A power supply device is also provided between the outer shell 2 and the inner shell 9. The power supply device can be an independent power supply or an external power supply. A button or a control panel is provided on the outer wall of the second outer shell 22.

The above is only the specific embodiment of the present invention, but the protection scope of the present invention is not limited thereto. Any changes or substitutions conceivable to those skilled in the art within the technical scope disclosed by the present invention should be covered within the protection scope of the present invention. Therefore, the protection scope of the present invention shall be subject to the protection scope of the claims.

## Claims

1. A pet snack machine, comprising an outer shell (2), wherein:
a food inlet is provided at the top of the outer shell (2), a food outlet is provided at the side wall of the outer shell (2), and a food storage bin (3), a transition bin (4) and a projection bin (5) are provided inside the outer shell (2), wherein:
the food storage bin (3), the transition bin (4) and the projection bin (5) are sequentially communicated from top to bottom;
the projection bin (5) is communicated with the food outlet,
the pet snack machine being **characterized in that** it further comprises:
a sealing cover (1) covering the outer shell (2), in which the sealing cover (1) comprises a cover, a knob (11), a connector (14) and an elastic element (15), wherein:
the cover is provided with a mounting hole (121), and the knob (11) is rotatably provided in the mounting hole (121);
the connector (14) is slidably provided in the outer shell (2), one end of the connector (14) is abutted against the knob (11), the other end of the connector (14) passes through the cover and is provided with an abutting part (142), the inner side of the outer shell (2) is provided with a grid blocking part (23) at a position corresponding to the abutting part (142), the abutting part (142) is capable of being abutted against the lower side of the grid blocking part (23) to lock the sealing cover (1), the elastic element (15) is provided in the cover, and both ends of the elastic element are abutted against the cover and the connector (14) respectively, so that the knob (11) is rotated, and the connector (14) is movable in the direction close to the knob (11) under the action of the elastic element (15) to separate the abutting part (142) from the grid blocking part (23);
the sealing cover (1) is provided on the food inlet and above the food storage bin (3);
a first chute (123) is provided inside the cover, and the connector (14) is slidably provided in the first chute (123); a first mounting part (122) is provided in the first chute (123), a second chute (143) is provided on the connector (14), a second mounting part (141) is provided on the inner wall of the second chute (143), the first mounting part (122) passes through the second chute (143) and is provided opposite to the second mounting part (141), and both ends of the elastic element (15) are provided on the first mounting part (122) and the second mounting part (141), respectively.

2. The pet snack machine according to claim 1, wherein the bottom of the knob (11) is provided with an arc-shaped guide plate (111), the connector (14) is abutted against the arc-shaped guide plate (111), the curvature of the arc-shaped guide plate (111) gradually increases in the direction from the starting end to the ending end, the knob (11) is rotated in the direction from the starting end to the ending end, and the connector (14) slides to the inner side of the outer shell (2) under the action of the elastic element (15) so that the abutting part (142) is separated from the grid blocking part (23).

3. The pet snack machine according to claim 1, wherein an unloading mechanism with double food stirring trays (6) is also provided inside the outer shell (2), the unloading mechanism with double food stirring trays (6) comprises an upper food stirring tray (61), a lower food stirring tray (62) and a food stirring driving device (63), wherein the upper food stirring tray (61) and the lower food stirring tray (62) synchronously rotate when being driven by the food stirring driving device (63), wherein:
the upper food stirring tray (61) is provided in the food storage bin (3);
a transition chamber is provided in the transition bin (4), the lower food stirring tray (62) is provided in the transition chamber, at least two lower food stirring plates (621) are provided on the lower food stirring tray (62), and all the lower food stirring plates (621) divide the transition chamber into at least two transition units;
the upper food stirring tray (61) is capable of pushing pet snacks in the food storage bin (3) into the transition unit and is pushed into the projection bin (5) by the lower food stirring plate (621).

4. The pet snack machine according to claim 3, wherein the shape of the transition chamber is cylindrical, the lower food stirring tray (62) comprises a rotating shaft (622), all the lower food stirring plates (621) are uniformly and detachably distributed on the outer wall of the rotating shaft (622), all the lower food stirring plates (621) divide the transition chamber into at least two transition units uniformly, and the transmission end (6222) of the rotating shaft (622) is in transmission connection with the food stirring driving device (63).

5. The pet snack machine according to claim 4, wherein the upper food stirring tray (61) comprises a post part (612) and an upper food stirring plate (611), wherein:
the number of the upper food stirring plates (611) is at least one, all the upper food stirring plates (611) are circumferentially distributed on the outer wall of the post part (612), and the connecting end (6221) of the rotating shaft (622) passes through the transition chamber and is inserted into the food storage bin (3) to be connected with the post part (612);
the upper food stirring plate (611) is provided as an arc-shaped food stirring plate, and the upper food stirring plate (611) is obliquely provided with respect to the post part (612).

6. The pet snack machine according to claim 1, wherein an ejection channel (55) is provided in the projection bin (5), a first guide rail (51) is provided on the side wall of the projection bin (5) communicated with the ejection channel (55), a cam ejection mechanism (7) is also provided inside the outer shell (2), the cam ejection mechanism (7) comprises an ejection driving device (71), a slider (72) and a pushing plate (73), wherein:
the pushing plate (73) is provided inside the ejection channel (55), one end of the slider (72) is in transmission connection with the ejection driving device (71), and the other end of the slider (72) is connected with the pushing plate (73) through the first guide rail (51); the slider (72) is capable of driving the pushing plate (73) to move back and forth along the ejection channel (55) when being driven by the driving device.

7. The pet snack machine according to claim 6, wherein the ejection driving device (71) comprises an ejection power device (711), an ejection cam (712) and a double-shockproof spring mechanism (713), an abutting wheel (721) is provided at one end of the slider (72) far away from the pushing plate (73), and a limit switch (74) is provided on the outer wall of the projection bin (5), wherein:
the ejection cam (712) comprises a main wheel (7121) and an arc-shaped blade (7122) connected with the main wheel (7121), the main wheel (7121) is in transmission connection with the ejection power device (711), the curvature of the arc-shaped blade (7122) gradually increases in the direction far away from the main wheel (7121), the slider (72) is slidably provided on the double-shockproof spring mechanism (713) and is capable of being abutted against the outer side of the arc-shaped blade (7122) through the abutting wheel (721);
the limit switch (74) is electrically connected with the ejection power device (711), and the slider (72) is capable of being abutted against the limit switch (74) to close the ejection power device (711).

8. The pet snack machine according to claim 7, wherein the double-shockproof spring mechanism (713) comprises a guide rod (7132), a thrust spring (7131) and a damping spring (7133), and a first mounting block (52) and a second mounting block (53) are provided on the side wall of the projection bin (5), wherein:
both ends of the guide rod (7132) are provided on the first mounting block (52) and the second mounting block (53), respectively, and the guide rod (7132) is provided parallel to the ejection channel (55);
the thrust spring (7131) is sleeved on the guide rod (7132), and both ends of the thrust spring are abutted against the slider (72) and the first mounting block (52), respectively;
the damping spring (7133) is sleeved on the guide rod (7132), and both ends of the damping spring are abutted against the slider (72) and the second mounting block (53), respectively;
the slider (72) is sleeved on the guide rod (7132), the ejection cam (712) is capable of being abutted against the abutting wheel (721) when being driven by the ejection power device (711) and pushes the slider (72) to slide along the guide rod (7132) so that the slider (72) drives the thrust spring (7131) to deform; and the ejection cam (712) is separable from the abutting wheel (721), so that the slider (72) moves reversely along the guide rod (7132) when being driven by the thrust spring (7131).

## Patentansprüche

1. Snackmaschine für Haustiere, umfassend eine Außenhülle (2),
wobei ein Futtereinlass an der Spitze der Außenhülle (2) vorgesehen ist, ein Futterauslass an der Seitenwand der Außenhülle (2) vorgesehen ist, und ein Futterspeicherbehälter (3), ein Übergangsbehälter (4) und ein vorstehender Behälter (5) innerhalb der Außenhülle (2) vorgesehen sind,
wobei der Futterspeicherbehälter (3), der Übergangsbehälter (4) und der vorstehende Behälter (5) aufeinanderfolgend von oben nach unten miteinander verbunden sind,
der vorstehende Behälter (5) mit dem Futterauslass in Verbindung steht, wobei die Snackmaschine für Haustiere **dadurch gekennzeichnet ist, dass** sie weiterhin umfasst:
eine Dichtungsabdeckung (1), die die Außenhülle (2) abdeckt,
wobei die Dichtungsabdeckung (1) eine Abdeckung, einen Knopf (11), einen Verbinder (14) und ein elastisches Element (15) umfasst,
wobei die Abdeckung mit einem Montageloch (121) versehen ist und der Knopf (11) drehbar in dem Montageloch (121) vorgesehen ist,
wobei der Verbinder (14) verschiebbar in der Außenhülle (2) vorgesehen ist, ein Ende des Verbinders (14) gegen den Knopf (11) gestoßen wird, das andere Ende des Verbinders (14) durch die Abdeckung hindurchgeht und mit einem Anschlagteil (142) versehen ist, die Innenseite der Außenhülle (2) mit einem Gitterblockierteil (23) an einer Position versehen ist,
die dem Anschlagteil (142) entspricht, das Anschlagteil (142) gegen die Unterseite des Gitterblockierteils (23) gestoßen werden kann, um die Dichtungsabdeckung (1) zu verriegeln,
das elastische Element (15) in der Abdeckung vorgesehen ist und beide Enden des elastischen Elements gegen die Abdeckung und den Verbinder (14) gestoßen werden, so dass der Knopf (11) gedreht wird und der Verbinder (14) in der Richtung in der Nähe des Knopfs (11) unter Wirkung des elastischen Elements (15) beweglich ist, um das Anschlagteil (142) von dem Gitterblockierteil (23) zu trennen;
wobei die Dichtungsabdeckung (1) an dem Futtereinlass und über dem Futterspeicherbehälter (3) vorgesehen ist,
wobei eine erste Rutsche (123) innerhalb der Abdeckung vorgesehen ist, und der Verbinder (14) verschiebbar in der ersten Rutsche (123) vorgesehen ist, ein erstes Montageteil (122) in der ersten Rutsche (123) vorgesehen ist, eine zweite Rutsche (143) an dem Verbinder (14) vorgesehen ist, ein zweites Montageteil (141) an der Innenwand der zweiten Rutsche (143) vorgesehen ist, das erste Montageteil (122) durch die zweite Rutsche (143) hindurchgeht und gegenüber dem zweiten Montageteil (141) vorgesehen ist, und beide Enden des elastischen Elements (15) jeweils an dem ersten Montageteil (122) und dem zweiten Montageteil (141) vorgesehen sind.

2. Snackmaschine für Haustiere nach Anspruch 1, wobei der Boden des Knopfs (11) mit einer bogenförmigen Führungsplatte (111) versehen ist, der Verbinder (14) gegen die bogenförmige Führungsplatte (111) gestoßen wird, die Krümmung der bogenförmigen Führungsplatte (111) allmählich in der Richtung vom Anfangsende zum Beendungsende zunimmt, der Knopf (11) in der Richtung vom Anfangsende zum Beendungsende gedreht wird und der Verbinder (14) unter Wirkung des elastischen Elements (15) zur Innenseite der Außenhülle (2) gleitet, so dass das Anschlagteil (142) von dem Gitterblockierteil (23) getrennt wird.

3. Snackmaschine für Haustiere nach Anspruch 1, wobei ein Entlademechanismus mit doppelten Futterrührschalen (6) auch innerhalb der Außenhülle (2) vorgesehen ist, und wobei der Entlademechanismus mit doppelten Futterrührschalen (6) eine obere Futterrührschale (61), eine untere Futterrührschale (62) und eine Futterrührantriebsvorrichtung (63) umfasst, und wobei die obere Futterrührschale (61) und die untere Futterrührschale (62) synchron rotieren, wenn sie von der Futterrührantriebsvorrichtung (63) angetrieben werden, und wobei:
die obere Futterrührschale (61) in dem Futterspeicherbehälter (3) vorgesehen ist,
eine Übergangskammer in dem Übergangsbehälter (4) vorgesehen ist, die untere Futterrührschale (62) in der Übergangskammer vorgesehen ist, mindestens zwei untere Futterrührplatten (621) an der unteren Futterrührschale (62) vorgesehen sind, und alle unteren Futterrührplatten (621) die Übergangskammer in mindestens zwei Übergangseinheiten unterteilen;
die obere Futterrührschale (61) in der Lage ist, Haustiersnacks in dem Futterspeicherbehälter (3) in die Übergangseinheit zu schieben, und durch die untere Futterrührplatte (621) in den vorstehenden Behälter (5) geschoben wird.

4. Snackmaschine für Haustiere nach Anspruch 3, wobei die Form der Übergangskammer zylindrisch ist, und wobei die untere Futterrührschale (62) eine rotierende Welle (622) umfasst, und wobei alle unteren Futterrührplatten (621) gleichmäßig und lösbar an der Außenwand der rotierenden Welle (622) verteilt sind, und wobei alle unteren Futterrührplatten (621) die Übergangskammer gleichmäßig in mindestens zwei Übergangseinheiten unterteilen und das Übertragungsende (6222) der rotierenden Welle (622) in Übertragungsverbindung mit der Futterrührantriebsvorrichtung (63) steht.

5. Snackmaschine für Haustiere nach Anspruch 4, wobei die obere Futterrührschale (61) ein Pfostenteil (612) und eine obere Futterrührplatte (611) umfasst, wobei die Anzahl der oberen Futterrührplatten (611) mindestens 1 beträgt, alle oberen Futterrührplatten (611) in Umfangsrichtung an der Außenwand des Pfostenteils (612) verteilt sind, und das Verbindungsende (6221) der rotierenden Welle (622) durch die Übergangskammer hindurchgeht und in den Futterspeicherbehälter (3) eingeführt wird, um mit dem Pfostenteil (612) verbunden zu werden,
die obere Futterrührplatte (611) als bogenförmige Futterrührplatte vorgesehen ist, und die obere Futterrührplatte (611) schräg in Bezug auf das Pfostenteil (612) vorgesehen ist.

6. Snackmaschine für Haustiere nach Anspruch 1, wobei ein Auswurfkanal (55) in dem vorstehenden Behälter (5) vorgesehen ist, und wobei eine erste Führungsschiene (51) an der Seitenwand des vorstehenden Behälters (5), der mit dem Auswurfkanal (55) in Verbindung steht, vorgesehen ist, und wobei ein Nockenauswurfmechanismus (7) auch innerhalb der Außenhülle (2) vorgesehen ist, und wobei der Nockenauswurfmechanismus (7) eine Auswurfantriebsvorrichtung (71), einen Schieber (72) und eine Druckplatte (73) umfasst, und wobei die Druckplatte (73) innerhalb des Auswurfkanals (55) vorgesehen ist, ein Ende des Schiebers (72) in Übertragungsverbindung mit der Auswurfantriebsvorrichtung (71) steht und das andere Ende des Schiebers (72) durch die erste Führungsschiene (51) mit der Druckplatte (73) verbunden ist, und der Schieber (72) in der Lage ist, die Druckplatte (73) dazu anzutreiben, sich entlang dem Auswurfkanal (55) hin und her zu bewegen, wenn er durch die Antriebsvorrichtung angetrieben wird.

7. Snackmaschine für Haustiere nach Anspruch 6, wobei die Auswurfantriebsvorrichtung (71) eine Auswurfkraftvorrichtung (711), einen Auswurfnocken (712) und einen doppelt stoßfesten Federmechanismus (713) umfasst, und wobei ein Anschlagrad (721) an einem der Druckplatte (73) abgewandten Ende des Schiebers (72) vorgesehen ist und ein Endschalter (74) an der Außenwand des vorstehenden Behälters (5) vorgesehen ist, und wobei der Auswurfnocken (712) ein Hauptrad (7121) und eine mit dem Hauptrad (7121) verbundene bogenförmige Schaufel (7122) umfasst, das Hauptrad (7121) in Übertragungsverbindung mit der Auswurfkraftvorrichtung (711) steht, die Krümmung der bogenförmigen Schaufel (7122) in der vom Hauptrad (7121) entfernten Richtung allmählich zunimmt, der Schieber (72) verschiebbar auf dem doppelt stoßfesten Federmechanismus (713) vorgesehen ist und durch das Anschlagrad (721) gegen die Außenseite der bogenförmigen Schaufel (7122) gestoßen werden kann,
der Endschalter (74) elektrisch mit der Auswurfkraftvorrichtung (711) verbunden ist, und der Schieber (72) gegen den Endschalter (74) gestoßen werden kann, um die Auswurfkraftvorrichtung (711) zu schließen.

8. Snackmaschine für Haustiere nach Anspruch 7, wobei der doppelt stoßfeste Federmechanismus (713) eine Führungsstange (7132), eine Druckfeder (7131) und eine Dämpfungsfeder (7133) umfasst, und wobei ein erster Montageblock (52) und ein zweiter Montageblock (53) an der Seitenwand des vorstehenden Behälters (5) vorgesehen sind, wobei beide Enden der Führungsstange (7132) an dem ersten Montageblock (52) und dem zweiten Montageblock (53) vorgesehen sind und die Führungsstange (7132) parallel zu dem Auswurfkanal (55) vorgesehen ist,
Wobei die Führungsstange (7132) mit der Druckfeder (7131) ummantelt ist, und beide Enden der Druckfeder jeweils gegen den Schieber (72) und den ersten Montageblock (52) gestoßen werden,
die Führungsstange (7132) mit der Dämpfungsfeder (7133) ummantelt ist, und beide Enden der Dämpfungsfeder jeweils gegen den Schieber (72) und den zweiten Montageblock (53) gestoßen werden,
wobei die Führungsstange (7132) mit dem Schieber (72) ummantelt ist, der Auswurfnocken (712) in der Lage ist, gegen das Anschlagrad (721) gestoßen zu werden, wenn er von der Auswurfkraftvorrichtung (711) angetrieben wird, und den Schieber (72) dazu drückt, entlang der Führungsstange (7132) zu gleiten, so dass der Schieber (72) die Druckfeder (7131) zur Verformung antreibt; und der Auswurfnocken (712) von dem Anschlagrad (721) trennbar ist, so dass sich der Schieber (72) entlang der Führungsstange (7132) in umgekehrter Richtung bewegt, wenn er von der Druckfeder (7131) angetrieben wird.

## Revendications

1. Distributeur de collations pour animaux de compagnie, comprenant une coque extérieure (2), dans lequel :
une entrée d'aliment est prévue à la partie supérieure de la coque extérieure (2), une sortie d'aliment est prévue sur la paroi latérale de la coque extérieure (2), et une cuve de stockage d'aliment (3), une cuve de transition (4) et une cuve de projection (5) sont prévues à l'intérieur de la coque extérieure (2), dans lequel :
la cuve de stockage d'aliment (3), la cuve de transition (4) et la cuve de projection (5) sont en communication en séquence de haut en bas ;
la cuve de projection (5) est en communication avec la sortie d'aliment,
le distributeur de collations pour animaux de compagnie étant **caractérisée en ce qu'**il comprend en outre :
un couvercle d'étanchéité (1) recouvrant la coque extérieure (2), dans lequel le couvercle d'étanchéité (1) comprend un couvercle, un bouton (11), un connecteur (14) et un élément élastique (15), dans lequel :
le couvercle est pourvu d'un trou de montage (121) et le bouton (11) est prévu de manière rotative dans le trou de montage (121) ;
le connecteur (14) est prévu de manière glissante dans la coque extérieure (2), une extrémité du connecteur (14) s'appuie contre le bouton (11), l'autre extrémité du connecteur (14) passe à travers le couvercle et est pourvu d'une portion adjacente (142), le côté intérieure de la coque extérieure (2) est pourvue d'une portion de blocage à grille (23) à une position correspondante à la portion adjacente (142), la portion adjacente (142) s'appuie contre le côté inférieur de la portion de blocage à grille (23) pour verrouiller le couvercle d'étanchéité (1),
l'élément élastique (15) est prévu dans le couvercle, et deux extrémités de l'élément élastique s'appuient contre le couvercle et le connecteur (14) respectivement, de sorte que le bouton (11) soit tourné, et le connecteur (14) est mobile dans le sens proche du bouton (11) sous l'action de l'élément élastique (15) pour séparer la portion adjacente (142) de la portion de blocage à grille (23) ;
le couvercle d'étanchéité (1) est prévu sur l'entrée d'aliment et au-dessus de la cuve de stockage d'aliment (3) ;
une première goulotte (123) est prévue à l'intérieur du couvercle, et le connecteur (14) est prévu de manière glissante dans la première goulotte (123) ; une première portion de montage (122) est prévue dans la première goulotte (123), une deuxième goulotte (143) est prévue sur le connecteur (14), une deuxième portion de montage (141) est prévue sur la paroi intérieure de la deuxième goulotte (143), la première portion de montage (122) passe à travers la deuxième goulotte (143) et est prévue à l'opposé de la deuxième portion de montage (141), et deux extrémités de l'élément élastique (15) sont prévues sur la première portion de montage (122) et la deuxième portion de montage (141), respectivement.

2. Distributeur de collations pour animaux de compagnie selon la revendication 1, dans lequel la partie inférieure du bouton (11) est pourvu d'une plaque de guidage en arc (111), le connecteur (14) s'appuie contre la plaque de guidage en arc (111), la courbure de la plaque de guidage en arc (111) augmente progressivement dans le sens de l'extrémité de départ à l'extrémité d'arrivée, le bouton (11) est tourné dans le sens de l'extrémité de départ à l'extrémité d'arrivée, et le connecteur (14) glisse e vers le côté intérieur de la coque extérieure (2) sous l'action de l'élément élastique (15) de sorte que la portion adjacente (142) soit séparée de la portion de blocage à grille (23).

3. Distributeur de collations pour animaux de compagnie selon la revendication 1, dans lequel un mécanisme de déchargement à doubles plateaux d'agitation d'aliment (6) est également prévu à l'intérieur de la coque extérieure (2), le mécanisme de déchargement à doubles plateaux d'agitation d'aliment (6) comprend un plateau supérieur d'agitation d'aliment (61), un plateau inférieur d'agitation d'aliment (62) et un dispositif d'entraînement d'aliment (63), dans lequel le plateau supérieur d'agitation d'aliment (61) et le plateau inférieur d'agitation d'aliment (62) tournent de manière synchrone lorsqu'ils sont entraînés par le dispositif d'entraînement d'aliment (63), dans lequel :
le plateau supérieur d'agitation d'aliment (61) est prévu dans la cuve de stockage d'aliment (3) ;
une chambre de transition est prévue dans la cuve de transition (4), le plateau inférieur d'agitation d'aliment (62) est prévu dans la chambre de transition, au moins deux plaques inférieures d'agitation d'aliment (621) sont prévues sur le plateau inférieur d'agitation d'aliment (62) et toutes les plaques inférieures d'agitation d'aliment (621) divisent la chambre de transition en au moins deux unités de transition ;
le plateau supérieur d'agitation d'aliment (61) pousse les collations pour animaux de compagnie contenus dans la cuve de stockage d'aliment (3) vers l'unité de transition et est poussé dans la cuve de projection (5) par la plaque inférieure d'agitation d'aliment (621).

4. Distributeur de collations pour animaux de compagnie selon la revendication 3, dans lequel la chambre de transition est en forme cylindrique, le plateau inférieur d'agitation d'aliment (62) comprend un arbre rotatif (622), toutes les plaques inférieures d'agitation d'aliment (621) sont réparties de manière uniforme et détachable sur la paroi extérieure de l'arbre rotatif (622), toutes les plaques inférieures d'agitation d'aliment (621) divisent de manière uniforme la chambre de transition en au moins deux unités de transition, et une extrémité de transmission (6222) de l'arbre rotatif (622) est en connexion de transmission avec le dispositif d'entraînement d'aliment (63).

5. Distributeur de collations pour animaux de compagnie selon la revendication 4, dans lequel le plateau supérieur d'agitation d'aliment (61) comprend une portion arrière (612) et une plaque supérieure d'agitation alimentaire (611), dans lequel :
le nombre des plaques supérieures d'agitation d'aliment (611) est d'au moins un, toutes les plaques supérieures d'agitation d'aliment (611) sont réparties de manière circonférentielle sur la paroi extérieure de la portion arrière (612) et l'extrémité de connexion (6221) de l'arbre rotatif (622) passe à travers la chambre de transition et est insérée dans la cuve de stockage d'aliment (3) pour être connectée à la portion arrière (612) ;
la plaque supérieure d'agitation d'aliment (611) est prévue sous forme de plaque d'agitation d'aliment en arc, et la plaque supérieure d'agitation d'aliment (611) est prévue de manière oblique par rapport à la portion arrière (612).

6. Distributeur de collations pour animaux de compagnie selon la revendication 1, dans lequel un canal d'éjection (55) est prévu dans la cuve de projection (5), un premier rail de guidage (51) est prévu sur la paroi latérale de la cuve de projection (5) en communication avec le canal d'éjection (55), un mécanisme d'éjection de came (7) est également prévu à l'intérieur de la coque extérieure (2), le mécanisme d'éjection de came (7) comprend un dispositif d'entraînement d'éjection (71), un curseur (72) et une plaque de poussée (73), dans lesquels : la plaque de poussée (73) est prévue à l'intérieur du canal d'éjection (55), une extrémité du curseur (72) est en connexion de transmission avec le dispositif d'entraînement d'éjection (71) et l'autre extrémité du curseur (72) est connectée à la plaque de poussée (73) par l'intermédiaire du premier rail de guidage (51) ; le curseur (72) entraîne la plaque de poussée (73) à se déplacer vers l'avant ou l'arrière le long du canal d'éjection (55) lorsqu'il est entraîné par le dispositif d'entraînement.

7. Distributeur de collations pour animaux de compagnie selon la revendication 6, dans lequel dispositif d'entraînement d'éjection (71) comprend un dispositif de puissance d'éjection (711), une came d'éjection (712) et un mécanisme à double ressort antichoc (713), une roue adjacente (721) est prévue à une extrémité du curseur (72) éloignée de la plaque de poussée (73), et un interrupteur de fin de course (74) est prévu sur la paroi extérieure de la cuve de projection (5), dans lequel :
la came d'éjection (712) comprend une roue principale (7121) et une lame en arc (7122) connectée à la roue principale (7121), la roue principale (7121) est en connexion de transmission avec le dispositif de puissance d'éjection (711), la courbure de la lame en arc (7122) augmente progressivement dans le sens éloigné de la roue principale (7121), le curseur (72) est prévu de manière glissante sur le mécanisme à double ressort antichoc (713) et s'appuie contre le côté extérieur de la lame en arc (7122) par l'intermédiaire de la roue adjacente (721) ;
l'interrupteur de fin de course (74) est connecté électriquement au dispositif de puissance d'éjection (711) et le curseur (72) s'appuie contre l'interrupteur de fin de course (74) pour fermer le dispositif de puissance d'éjection (711).

8. Distributeur de collations pour animaux de compagnie selon la revendication 7, dans lequel le mécanisme à double ressort antichoc (713) comprend une tige de guidage (7132), un ressort de poussée (7131) et un ressort d'amortissement (7133), et un premier bloc de montage (52) et un deuxième bloc de montage (53) sont prévus sur la paroi latérale de la cuve de projection (5), dans lequel :
deux extrémités de la tige de guidage (7132) sont respectivement prévues sur le premier bloc de montage (52) et le deuxième bloc de montage (53), et la tige de guidage (7132) est prévue parallèlement au canal d'éjection (55) ;
le ressort de poussée (7131) est gainé sur la tige de guidage (7132), et deux extrémités du ressort de poussée respectivement s'appuient contre le curseur (72) et le premier bloc de montage (52) ;
le ressort d'amortissement (7133) est gainé sur la tige de guidage (7132), et deux extrémités du ressort d'amortissement respectivement s'appuient contre le curseur (72) et le deuxième bloc de montage (53) ;
le curseur (72) est gainée sur la tige de guidage (7132), la came d'éjection (712) s'appuie contre la roue adjacente (721) lorsqu'elle est entraînée par le dispositif de puissance d'éjection (711) et pousse le curseur (72) à glisser le long de la tige de guidage (7132) de sorte que le curseur (72) entraîne le ressort de poussée (7131) à se déformer ; et la came d'éjection (712) est séparable de la roue adjacente (721), de sorte que le curseur (72) se déplace en sens inverse le long de la tige de guidage (7132) lorsqu'il est entraîné par le ressort de poussée (7131).
